# EUROPÄISCHE PATENTANMELDUNG

(11) **EP 1 426 844 A1**
(43) Veröffentlichungstag der Anmeldung: **09.06.2004**
(21) Anmeldenummer: 02406057.6
(22) Anmeldetag: 05.12.2002
(51) Int. Cl.: G05D 9/02

(54) **Vorrichtung zum Regeln der Zufuhr einer in einen Behälter führbaren Flüssigkeit und Anlage mit einer solchen Regelvorrichtung**

(71) Anmelder: MICAFIL AG, 8048 Zürich (CH)
(72) Erfinder: Altemeier, Rolf, D-79802 Dettighofen (DE); Koestinger, Paul, CH-8810 Horgen (CH); Spiess, Andreas, CH-8600 Dübendorf (CH)
(74) Vertreter: ABB Patent Attorneys

(57) **Zusammenfassung**

Die Vorrichtung (1) dient dem Regeln der Zufuhr einer Flüssigkeit (8) in einen Behälter (2), in dem sie unter Vakuum durch Entzug von Gas und Wasser aufbereitet wird. Nach der Aufbereitung bildet die Flüssigkeit (8) im Behälter (2) ein als Regelgrösse dienendes Niveau (5). Diese Regelvorrichtung weist ein die Flüssigkeitszufuhr steuerndes Stellventil (3) und einen auf das Stellventil (3) wirkenden Niveaudetektor (6) auf. Sie ist als mechanischer Proportionalregler ausgeführt und enthält ein Übertragungselement (7), welches den als Verdrängungskörper ausgeführten Niveaudetektor (6) mit einem Ventilkörper (4) des Stellventils kraftschlüssig koppelt.

Bei dieser Regelvorrichtung entfallen elektrische und elektronische Komponenten und wird durch einfach und robust ausgestaltete mechanische Elemente eine wartungsfreie, kontinuierliche und nur geringe Stellkräfte benötigende proportionale Regelung der Flüssigkeitszufuhr erreicht.

## Beschreibung

### TECHNISCHES GEBIET

Bei der Erfindung wird ausgegangen von einer Vorrichtung zum Regeln der Zufuhr einer in einen Behälter führbaren Flüssigkeit nach dem Oberbegriff von Patentanspruch 1. Die Erfindung betrifft zugleich auch eine Anlage mit einer solchen Regelvorrichtung.

Regelvorrichtungen und Anlagen der vorgenannten Art betreffen bevorzugt das Gebiet der Aufbereitung von Isolier- und Schmierflüssigkeiten, wie insbesondere von Isolieröl in elektrischen Apparaten und Geräten, beispielsweise Transformatoren. Hierbei wird in einem kontinuierlichen, gegebenenfalls mehrstufig ablaufenden Prozess die aufzubereitende Flüssigkeit erwärmt und die erwärmte Flüssigkeit in einen vakuumfesten Behälter gepumpt und dort unter Vakuum aufbereitet. Beim Aufbereiten werden aus der Flüssigkeit vor allem Gase und/oder Wasser entfernt. Danach wird die aufbereitete Flüssigkeit wieder aus dem Behälter gepumpt. Für das Ein- und das Ausfördern der aufbereiteten Flüssigkeit aus dem Behälter wird im allgemeinen jeweils eine Verdränger- oder Zentrifugalpumpe eingesetzt. Für das Einfördern kann gegebenenfalls auch die Druckdifferenz zwischen dem Druck der noch ausserhalb des Behälters befindlichen Flüssigkeit und dem (geringen) Behälterinnendruck in Verbindung mit geeigneten Drosseleinrichtungen, wie etwa Blenden oder Regulierventilen, ausgenutzt werden. In jedem Fall werden Ein- und Auslassvolumenstrom der Flüssigkeit so aufeinander abgestimmt, dass ein von der aufbereiteten Flüssigkeit im Behälter gebildetes Niveau lediglich innerhalb eines vorgegebenen Niveaubereichs schwanken kann. Dieses Niveau dient als Regelgrösse beim Einfördern der Flüssigkeit in den Behälter.

### STAND DER TECHNIK

Mit dem Oberbegriff nimmt die Erfindung auf einen Stand der Technik Bezug, wie er sich aus der Firmenschrift V 5977/5 Isolieröl-Aufbereitungs- und Trocknungsanlagen für Transformatoren der Firma Micafil Vakuumtechnik AG, Zürich/Schweiz ergibt. Eine in dieser Vorveröffentlichung beschriebene Anlage zur Aufbereitung von zuvor erwärmtem Isolieröl eines Transformators weist einen vakuumfesten Behälter sowie eine Vorrichtung zum Regeln der Zufuhr des in den Behälter geförderten Öls auf. Im Behälter befindet sich ein das Öl unter Vakuum durch Entgasen und Entwässern aufbereitendes Entgasungssystems. Nach der Aufbereitung dient das im Behälter sich einstellende und von der aufbereiteten Flüssigkeit gebildete Niveau als Regelgrösse der Regelvorrichtung. Diese Regelgrösse wird in Form eines elektrischen Signals von einem Niveaudetektor an ein Stellventil der Regelvorrichtung geführt, welches Ventil die Zufuhr des Öls in den Behälter diskontinuierlich bestimmt.

### DARSTELLUNG DER ERFINDUNG

Die Erfindung, wie sie in den Patentansprüchen definiert ist, löst die Aufgabe, eine Vorrichtung und eine Anlage der eingangs genannten Art anzugeben, welche sich durch einfachen und robusten Aufbau auszeichnen und auch unter erschwerten Betriebsbedingungen keiner Wartung bedürfen.

Die Vorrichtung nach der Erfindung ist als mechanischer Proportionalregler ausgeführt und weist ein Übertragungselement auf, welches den Niveaudetektor mit einem Ventilkörper des Stellventils kraftschlüssig koppelt. Durch diese Massnahme wird mit einfachen Mitteln eine proportionale Regelung der Flüssigkeitszufuhr erreicht. Da hierbei elektrische und elektronische Komponenten entfallen und lediglich einfach und robust ausgestaltete mechanische Elemente vorgesehen sind, kann die erfindungsgemässe Regelvorrichtung praktisch wartungsfrei betrieben werden.

In einer für bestimmte Regelungsaufgaben ausreichenden Güte reicht es aus, wenn das Übertragungselement als Hebelgetriebe ausgebildet ist.

Sollen jedoch grosse Volumenströme mit geringen Stellkräften geregelt werden, dann empfiehlt es sich, die Regelvorrichtung so weiterzubilden, dass sie zwei nach Art eines Teleskops zusammenwirkende und vorwiegend vertikal ausgerichtete Rohre aufweist. Von diesen beiden Rohren nimmt ein erstes die aufzubereitende Flüssigkeit auf und weist mindestens eine Austrittsöffnung für diese Flüssigkeit auf. Ein zweites Rohr ist mit dem Niveaudetektor kraftschlüssig verbunden. Dieses Rohr kann das erste Rohr konzentrisch umfassen, kann aber auch von diesem Rohr umschlossen sein. Das zweite Rohr enthält das Übertragungselement und den Ventilkörper und verändert in Abhängigkeit von der Lage des Niveaudetektors die Grösse der Austrittsöffnung, vorzugsweise mit seinem oberen Rohrende. Diese Ausbildungsform der erfindungsgemässen Regelvorrichtung zeichnet sich zugleich durch eine besonders kompakte Bauweise aus. Da das Übertragungselement und der Ventilkörper des Stellventils in das zweite Rohr integriert sind, entfallen zugleich als Hebelgetriebe ausgebildete Übertragungselemente.

Eine sehr genaue Regelung mit präzise zu verändernden Strömungsquerschnitten wird erreicht, wenn mindestens zwei jeweils als Langloch ausgebildete, vorwiegend in Richtung der Rohrachse erstreckte und nach oben axial gegeneinander versetzt endende Austrittsöffnungen vorgesehen sind. Die Stellkräfte bleiben dann besonders gering, da sie weitgehend unabhängig vom Druck und der Viskosität der Flüssigkeit sind.

Es empfiehlt sich, im ersten Rohr ein axial geführtes drittes Rohr anzuordnen, welches mit seinem einen Ende durch einen das erste Rohr an dessen unteren Ende abschliessenden Boden in einen im zweiten Rohr vorgesehenen Raum zur Aufnahme von Leckflüssigkeit geführt ist und mit seinem anderen Ende oberhalb der Austrittsöffnung durch die Wand des ersten Rohrs. Durch dieses dritte Rohr wird zum einen Leckflüssigkeit entfernt. Zum anderen kann sich dann in der Regelvorrichtung kein Druck aufbauen, der sonst die Betätigungskraft des die Flüssigkeitszufuhr steuernden Stellventils erheblich erhöhen würde.

Bei einer mit der erfindungsgemässen Regelvorrichtung ausgerüsteten Anlage ist diese Regelvorrichtung vor äusseren Eingriffen vollständig geschützt im Behälter untergebracht ist. Die Anlage zeichnet sich daher nicht nur durch einen geringen Raumbedarf aus, sondern zugleich auch durch Wartungsfreiheit.

Weist die Anlage den nach Art eines Teleskops ausgeführte Regler auf, so wird eine gute Verteilung der aufzubereitenden Flüssigkeit in einem im Behälter angeordneten Entgasungssystem durch ein feststehendes Abstreifelement erreicht, welches unterhalb einer Austrittsöffnung flüssigkeitsabweisend auf einer Mantelfläche eines ersten beider Teleskoprohre aufliegt. Durch ein solches Abstreifelement wird zugleich erreicht, dass nicht aufbereitete Flüssigkeit nur über das Entgasungssystem und nicht direkt zur niveaubildenden, aufbereiteten Flüssigkeit gelangen kann.

Weist der als Teleskop ausgeführte Regler zusätzlich ein Leckrohr auf, so empfiehlt es sich, dieses an seinem vom Leckflüssigkeit enthaltenden Raum abgewandten Ende oberhalb der Austrittsöffnung durch die Wand des ersten Rohrs in einen Ringraum zu führen, welcher begrenzt ist von der Innenwand eines durch den Deckel geführten Rohrstutzens und der Mantelfläche eines im Rohrstutzen geführten Abschnitts des ersten Rohrs. Es ist so sichergestellt, dass die bei Betrieb der Anlage anfallende Leckflüssigkeit nicht nur fortlaufend aus der Regelvorrichtung entfernt und so ein unerwünschter Druckaufbau im Leckflüssigkeitsaufnahmeraum vermieden wird, sondern dass die entfernte Flüssigkeit zugleich innerhalb des Behälters der aufzubereitenden Flüssigkeit zugeführt wird.

### BESCHREIBUNG DER ZEICHNUNGEN

Die Erfindung wird nachstehend anhand von Ausführungsbeispielen erläutert. Es zeigt:
- Fig. 1: in schematischer Darstellung eine Aufbereitungsanlage mit einer ersten Ausführungsform einer Regelvorrichtung nach der Erfindung,
- Fig. 2: eine Aufsicht auf einen vertikal geführten Schnitt durch einen vakuumdicht ausgeführten Behälter einer weiteren Aufbereitungsanlage, in welchem Behälter eine zweite Ausführungsform der erfindungsgemässen Regelvorrichtung angeordnet ist, und
- Fig.3: in vergrösserter Darstellung einen in Fig.2 umrandet dargestellten Teil der Regelvorrichtung.

### WEGE ZUR AUSFÜHRUNG DER ERFINDUNG

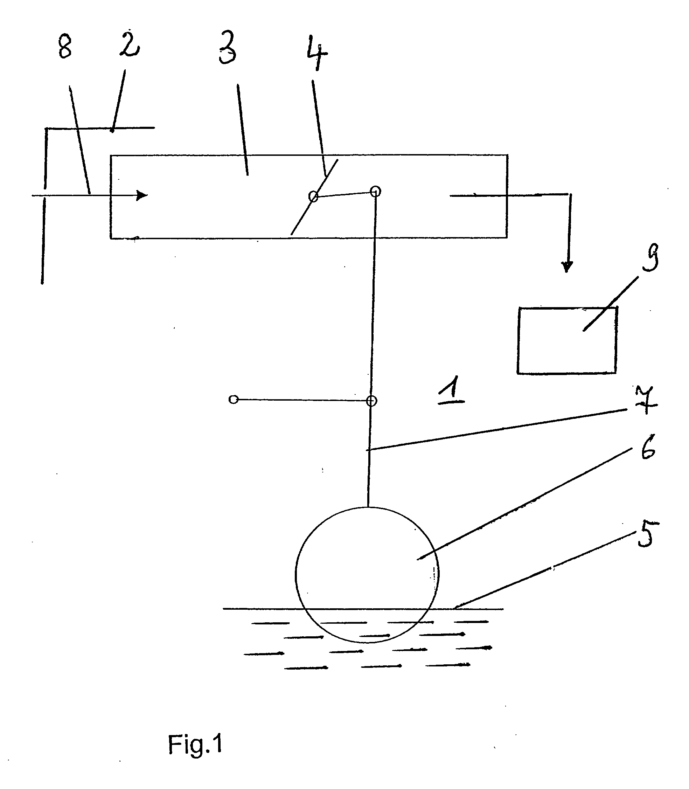

In allen Figuren bezeichnen gleiche Bezugszeichen auch gleichwirkende Teile. Die in Fig. 1 dargestellte und mit dem Bezugszeichen 1 gekennzeichnete Regelvorrichtung ist in einem nur andeutungsweise dargestellten evakuierbaren Behälter 2 einer Anlage zum Aufbereiten einer insbesondere Luft und Wasser enthaltenden Flüssigkeit, beispielsweise eines Schmier- oder Isolieröls, angeordnet. Sie weist ein Stellventil 3 mit einem beweglichen Ventilorgan 4, einen auf einem Niveau 5 schwimmenden und als Niveaudetektor wirkenden Verdrängungskörper 6 sowie ein als Hebelgetriebe 7 ausgebildetes Übertragungselement auf, welches Kraft vom Verdrängungskörper 6 auf das Ventilorgan 4 überträgt. Das Stellventil 3 regelt die Zufuhr der mit dem Bezugszeichen 8 gekennzeichneten, aufzubereitenden Flüssigkeit an ein im Behälter 2 vorgesehenes Entgasungssystem 9, in dem die zuvor ausserhalb des Behälters 2 erwärmte Flüssigkeit 8, in bekannter Weise, wie dies beispielsweise in EP 0 414 126 A2 beschrieben ist, von Luft und Wasser befreit werden. Die aufbereitete Flüssigkeit sammelt sich im Behälter und bildet das Niveau 5.

Die Vorrichtung 1 ist ersichtlich als mechanischer Proportionalregler ausgeführt und weist zudem ein Stellventil auf, dessen Durchlassquerschnitt über einen grossen Querschnittsbereich in proportionaler Abhängigkeit vom Niveau 5 veränderbar ist. Für einen kontinuierlichen Betrieb der Anlage ist es erforderlich, dass das Volumen der zugeführte Flüssigkeit 8 und das Volumen der aus dem Behälter geführten, aufbereiteten Flüssigkeit so aufeinander abgestimmt sind, dass das Niveau 5 lediglich innerhalb einer vorgebenen engen Niveautoleranz schwankt. Da die Regelvorrichtung 1 ersichtlich als Proportionalregler ausgeführt ist, erfüllt sie diese Forderung im Unterschied zu Reglern nach dem Stand der Technik mit diskontinuierlich arbeitenden, elektrisch angesteuerten Ventilen vollauf.

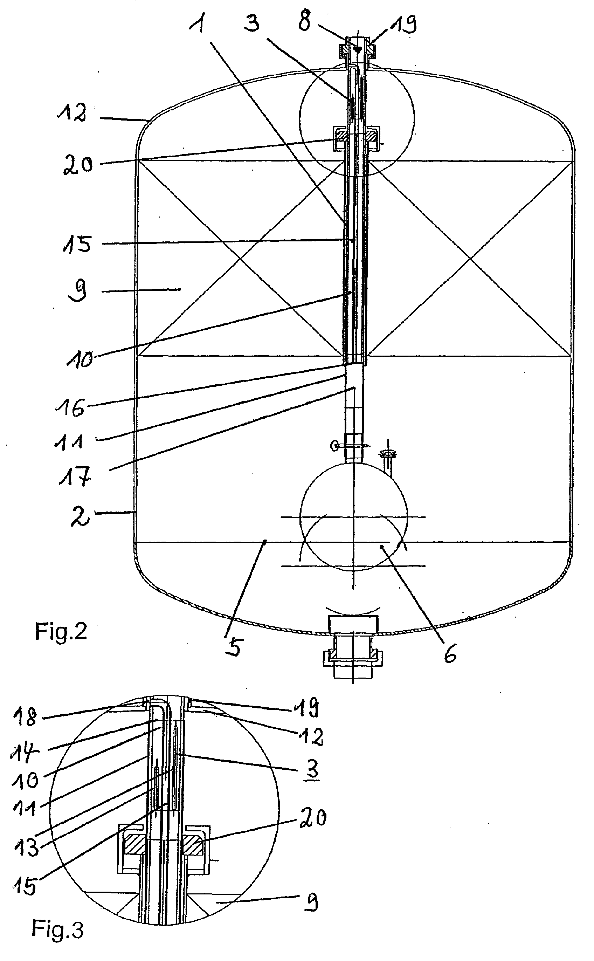

Bei der Ausführungsform nach den Figuren 2 und 3 ist die Regelvorrichtung 1 ebenfalls als als mechanischer Proportionalregler ausgeführt. Im Unterschied zur Ausführungsförm gemäss Fig.1 weist er jedoch zwei nach Art eines Teleskops zusammenwirkende und vorwiegend vertikal ausgerichtete Rohre 10 , 11 auf. Ein die zugeführte Flüssigkeit 8 aufnehmendes erstes 10 beider Rohre ist vakuumdicht durch einen Deckel 12 des Behälters 2 geführt und weist im Inneren des Behälters 2 angeordnete Austrittsöffnungen 13 (Fig.3) für die zugeführte Flüssigkeit 8 auf. Die Austrittsöffnungen sind jeweils als Langloch ausgebildet und sind vorwiegend in Richtung der Rohrachse erstreckt und nach oben axial gegeneinander versetzt. Das zweite Rohr 11 ist mit dem Verdrängungskörper 6 starr verbunden. Dieses Rohr umfasst das Rohr 10 konzentrisch und ist auf diesem in vertikaler Richtung verschieblich gelagert. Die beiden Rohre 10 und 11 wirken in ihrem die Austrittsöffnungen 13 umfassenden oberen Bereich als Stellventil 3. Das Rohr 11 wirkt zugleich als Übertragungselement und überträgt Kraft vom Verdrängungskörper 6 auf das Stellventil 3.

Bei einer Änderung des Niveaus 5 ändern sich die Positionen des Verdrängungskörpers 6 und des Rohrs 11. Ein aus Fig.3 ersichtliches und mit dem Bezugszeichen 14 gekennzeichnetes oberes Ende des Rohrs 11 verändert dann proportional die Grösse der Austrittsöffnungen 13 und damit auch die Zufuhr der Flüssigkeit. Wegen des teleskopartigen Aufbaus der Regelvorrichtung 1 wird für diese Änderung lediglich eine sehr geringe Stellkraft benötigt, so dass die Regelvorrichtung 1 nicht nur schnell, sondern auch sehr genau reagiert.

Ersichtlich ist im Rohr 10 ein parallel zur gemeinsamen Achse der Rohre 10, 11 geführtes schmales Rohr 15 angeordnet. Dieses Rohr ist durch einen das Rohr 10 an dessen unteren Ende abschliessenden Boden 16 in einen im Rohr 11 vorgesehenen Raum 17 zur Aufnahme von Leckflüssigkeit geführt. Mit seinem oberen Ende ist das Rohr 15 oberhalb der Austrittsöffnungen durch die Wand des Rohrs 10 in einen Ringraum 18 (Fig.3) geführt. Dieser Ringraum ist begrenzt von der Innenwand eines durch den Deckel 12 geführten Rohrstutzens 19 und der Mantelfläche eines im Rohrstutzen 19 geführten Abschnitts des ersten Rohrs 10. Beim Anheben des Niveaus 5 wird aus dem Raum 17 über das Rohr 15 Leckflüssigkeit geführt. Es wird so der Aufbau eines Drucks im Raum 17 vermieden, welcher sonst die Stellkraft des die Flüssigkeitszufuhr steuernden Stellventils 3 wesentlich vergrössern würde. Die entfernte Leckflüssigkeit gelangt in den Nutzraum des Behälters 2 und kann direkt dem Entgasungssystem 9 zugeführt werden.

Unterhalb der Austrittsöffnungen 13 ist ein auf der Mantelfläche des Rohrs 11 flüssigkeitsabweisend aufliegendes, feststehendes Abstreifelement 20 vorgesehen. Dieses Abstreifelement 20 stellt sicher, dass nicht aufbereitete Flüssigkeit nur über das Entgasungssystem 9 und nicht direkt zur niveaubildenden, aufbereiteten Flüssigkeit gelangen kann.

### BEZUGSZEICHENLISTE

- 1: Regelvorrichtung
- 2: Behälter
- 3: Stellventil
- 4: Ventilorgan
- 5: Niveau
- 6: Niveaudetektor, Verdrängungskörper
- 7: Übertragungselement, Hebelgetriebe
- 8: Flüssigkeit
- 9: Entgasungssystem
- 10,11: Rohre
- 12: Deckel
- 13: Austrittsöffnungen
- 14: Rohrende
- 15: Rohr
- 16: Boden
- 17: Raum
- 18: Ringraum
- 19: Stutzen
- 20: Abstreifelement

## Patentansprüche

1. Vorrichtung (1) zum Regeln der Zufuhr von Flüssigkeit (8) in einen Behälter, in dem die Flüssigkeit (8) unter Vakuum aufbereitbar ist und nach der Aufbereitung ein als Regelgrösse dienendes Niveau (5) bildet, welche Vorrichtung (2) ein die Flüssigkeitszufuhr steuerndes Stellventil (3) und einen auf das Stellventil wirkenden Niveaudetektor (6) aufweist, **dadurch gekennzeichnet, dass** die Vorrichtung als mechanischer Proportionalregler ausgeführt ist und ein Übertragungselement (7) aufweist, welches den Niveaudetektor (6) mit einem Ventilkörper (4) des Stellventils (3) kraftschlüssig koppelt.

2. Vorrichtung nach Anspruch 1, **dadurch gekennzeichnet, dass** das Übertragungselement als Hebelgetriebe (7) ausgebildet ist.

3. Vorrichtung nach Anspruch 1, **dadurch gekennzeichnet, dass** der Regler (1) zwei nach Art eines Teleskops zusammenwirkende und vorwiegend vertikal ausgerichtete Rohre (10, 11) aufweist, von denen ein die aufzubereitende Flüssigkeit (8) aufnehmendes erstes Rohr (10) mindestens eine Austrittsöffnung (13) für die aufzubereitende Flüssigkeit (8) aufweist, und von denen ein zweites Rohr (11) mit dem Niveaudetektor (6) verbunden ist, das Übertragungselement (7) und den Ventilkörper (4) umfasst und ein in Abhängigkeit von der Lage des Niveaudetektors (6) die wirksame Grösse der Austrittsöffnung (13) verändert.

4. Vorrichtung nach Anspruch 3, **dadurch gekennzeichnet, dass** mindestens zwei jeweils als Langloch ausgebildete, vorwiegend in Richtung der gemeinsamen Achse der beiden Teleskoprohre (10, 11) erstreckte und nach oben axial gegeneinander versetzt endende Austrittsöffnungen (13) vorgesehen sind.

5. Vorrichtung nach Anspruch 4, **dadurch gekennzeichnet, dass** das zweite (11) das erste Rohr (10) konzentrisch umfasst und dass im ersten Rohr (10) ein axial geführtes drittes Rohr (15) angeordnet ist, welches mit seinem einen Ende durch einen das erste Rohr (10) abschliessenden Boden (16) in einen im zweiten Rohr (11) vorgesehenen Raum (17) zur Aufnahme von Leckflüssigkeit und mit seinem anderen Ende oberhalb der Austrittsöffnung (13) durch die Wand des ersten Rohrs (10) geführt ist.

6. Anlage zur Aufbereitung einer Flüssigkeit (8) mit einem vakuumfesten Behälter (2) zum Entgasen und Entwässern der Flüssigkeit unter Vakuum und mit einer Vorrichtung (1) zum Regeln der Flüssigkeitszufuhr in den Behälter (2), bei der die Flüssigkeit (8) nach der Aufbereitung im Behälter (2) ein als Regelgrösse dienendes Niveau (5) bildet, und bei der die Regelvorrichtung (1) ein die Flüssigkeitszufuhr steuerndes Stellventil (3) und einen auf das Stellventil (3) wirkenden Niveaudetektor (6) enthält, **dadurch gekennzeichnet, dass** die Regelvorrichtung (1) als mechanischer Proportionalregler ausgeführt ist und ein Übertragungselement (7) aufweist, welches den Niveaudetektor (6) mit einem Ventilkörper (4) des Stellventils (3) kraftschlüssig koppelt.

7. Anlage nach Anspruch 6, **dadurch gekennzeichnet, dass** der Regler (1) zwei nach Art eines Teleskops zusammenwirkende und vorwiegend vertikal ausgerichtete Rohre (10, 11) aufweist, von denen ein die aufzubereitende Flüssigkeit aufnehmendes erstes Rohr (10) vakuumdicht durch einen Deckel (12) des Behälters (2) geführt ist und mindestens eine im Inneren des Behälters (2) angeordnete Austrittsöffnung (13) für die aufzubereitende Flüssigkeit (8) aufweist, und von denen ein zweites Rohr (10) verschiebbar ausgebildet und mit dem Niveaudetektor (6) verbunden ist, das Übertragungselement (7) und den Ventilkörper (3) umfasst und ein die Grösse der Austrittsöffnung (13) in Abhängigkeit vom Niveau (7) veränderndes oberes Rohrende (14) aufweist.

8. Anlage nach Anspruch 7, **dadurch gekennzeichnet, dass** zweite (11) das erste Rohr (10) konzentrisch umfasst, und dass im ersten Rohr (10) ein axial geführtes drittes Rohr (15) angeordnet ist, welches mit seinem einen Ende durch einen das erste Rohr (10) an dessen unteren Ende abschliessenden Boden (16) in einen im zweiten Rohr (11) vorgesehenen Raum (17) zur Aufnahme von Leckflüssigkeit geführt ist, und mit seinem anderen Ende oberhalb der Austrittsöffnung (13) durch die Wand des ersten Rohrs (10) in einen Ringraum (18), welcher begrenzt ist von der Innenwand eines durch den Deckel geführten Rohrstutzens (19) und der Mantelfläche eines im Rohrstutzen (19) geführten Abschnitts des ersten Rohrs (10).

9. Anlage nach Anspruch 8, **dadurch gekennzeichnet**, das unterhalb der Austrittsöffnung (13) ein auf der Mantelfläche des zweiten Rohrs (11) flüssigkeitsabweisend aufliegendes, feststehendes Abstreifelement (20) vorgesehen ist.
